# EUROPÄISCHE PATENTANMELDUNG

(11) **EP 3 889 699 A1**
(43) Veröffentlichungstag der Anmeldung: **06.10.2021**
(21) Anmeldenummer: 21161535.6
(22) Anmeldetag: 09.03.2021
(51) Int. Cl.: G05B 19/04

(54) **KOMMUNIKATIONSVORRICHTUNG UND VERFAHREN ZUR WEITERGABE VON DATEN AUS EINEM REGELKREIS**

(30) Priorität: 02.04.2020 DE 102020109241
(71) Anmelder: SICK AG, 79183 Waldkirch (DE)
(72) Erfinder: APPEL, Bernd, 78050 Villingen-Schwenningen (DE); LANIGRA, Marc, 78166 Donaueschingen (DE); TORABI, Bahram, 79249 Merzhausen (DE)

(57) **Zusammenfassung**

Es wird eine Kommunikationsvorrichtung (10) für einen Regelkreis mit einer Regeleinrichtung (20) und einem über eine Verbindungsleitung (26) mit der Regeleinrichtung (20) verbundenen Aktor (22) angegeben, der einen Sensor (24) zum Bestimmen einer Regelgröße aufweist. Dabei weist die Kommunikationsvorrichtung (10) zum Anschließen an die Verbindungsleitung (26) eine erste Schnittstelle (12) für eine Verbindung mit der Regeleinrichtung (20), eine zweite Schnittstelle (14) für eine Verbindung mit dem Aktor (22) und eine dritte Schnittstelle (16) für eine Verbindung mit einem Drittsystem (36, 38, 40) auf, um zumindest Teile einer Kommunikation auf der Verbindungsleitung (26) oder daraus gewonnene Daten an das Drittsystem (36, 38, 40) weiterzugeben.

## Beschreibung

Die Erfindung betrifft eine Kommunikationsvorrichtung für einen Regelkreis und ein Verfahren zur Weitergabe von Daten aus einem Regelkreis nach dem Oberbegriff von Anspruch 1 beziehungsweise 15.

Ein solcher Regelkreis ist beispielsweise in einem Servomotor implementiert. Ein Servomotor regelt die Winkelposition seiner Motorwelle beziehungsweise die (Winkel-)Geschwindigkeit und Beschleunigung. Dazu ist erforderlich, die jeweilige Drehstellung oder Winkelposition zu messen, und dafür eingesetzte Encoder oder Drehgeber werden auch Motorfeedbacksystem genannt. Die Regelelektronik, die manchmal als Servo Drive und im Folgenden als Servoregler bezeichnet wird, ist meist abgesetzt außerhalb des eigentlichen Motors untergebracht. Demnach muss in dem Regelkreis zwischen Motor beziehungsweise dessen Drehgeber und dem Servoregler eine Kommunikation etabliert werden. Zudem wird der Motor natürlich auch mit den jeweiligen phasenrichtigen Strömen für dessen Betrieb versorgt. Da der Regelkreis in der Lage sein muss, sehr schnell zu reagieren, bestehen Echtzeitanforderungen an die Kommunikation, und deshalb wird der Regelkreis auch als Fast-(Feedback)-Loop bezeichnet.

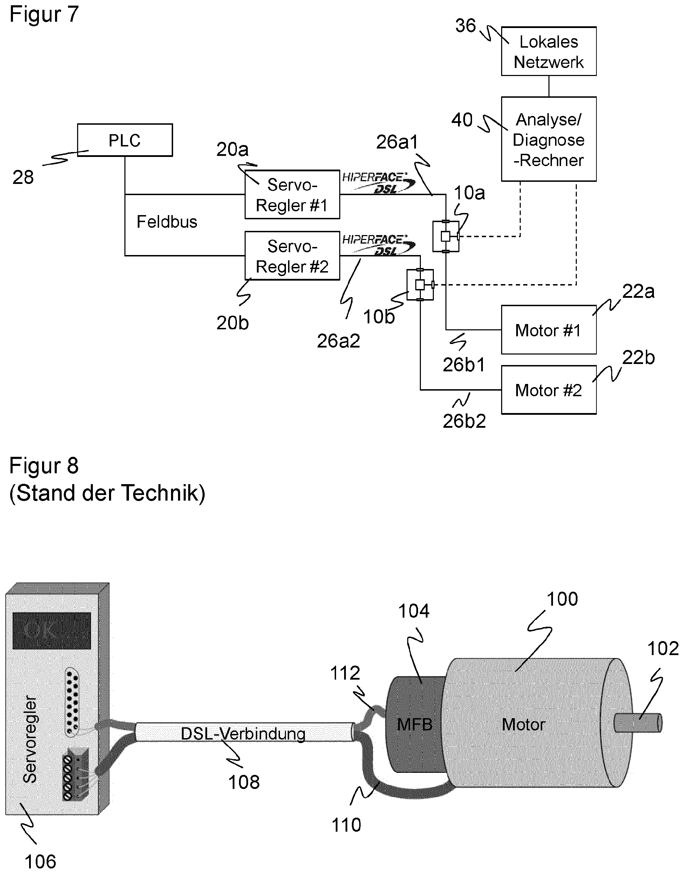

Ein rein digitales Motor-Feedback-Protokoll für diese Kommunikation, das mit einem Minimum an Verbindungsleitungen auskommt, ist die offene Schnittstelle HIPERFACE DSL® der Anmelderin. Ein entsprechender Regelkreis für einen Motor 100 ist in Figur 8 dargestellt. Die jeweilige Winkelstellung der Motorwelle 102 wird über einen mit MFB für Motorfeedback bezeichneten Encoder oder Drehgeber 104 bestimmt. Ein Servoregler 106 ist über ein Kabel 108 mit dem Motor 100 und dem Drehgeber 104 verbunden. Das Kabel 108 weist je eine Teilleitung 110, 112 zur Ansteuerung und Versorgung des Motors 100 beziehungsweise zur Übermittlung der Winkelstellung von dem Drehgeber 104 auf. Auf diese Weise kennt der Servoregler 106 die Regelgröße, nämlich die aktuelle Winkelposition, und kann sie durch entsprechende Ansteuerung des Motors gemäß seiner Führungsgröße regeln. Weitere Details zu der Schnittstelle finden sich auf www.hiper-facedsl.com.

Die Kommunikation in dem Regelkreis ist jedoch in sich abgeschlossen, so dass keine einfache Möglichkeit der Diagnose, Verbesserung oder sonstigen Datenanalyse besteht. Aufgrund der Echtzeitanforderungen in der Fast-Loop wird auch herkömmlich vor jeglichem nicht auf die eigentliche Regelungsfunktion gerichteten Eingriff in den Regelkreis zurückgescheut. Dies alles erschwert jedoch erheblich die Einbindung in eine moderne Infrastruktur, etwa in Anwendungen von Industrie 4.0.

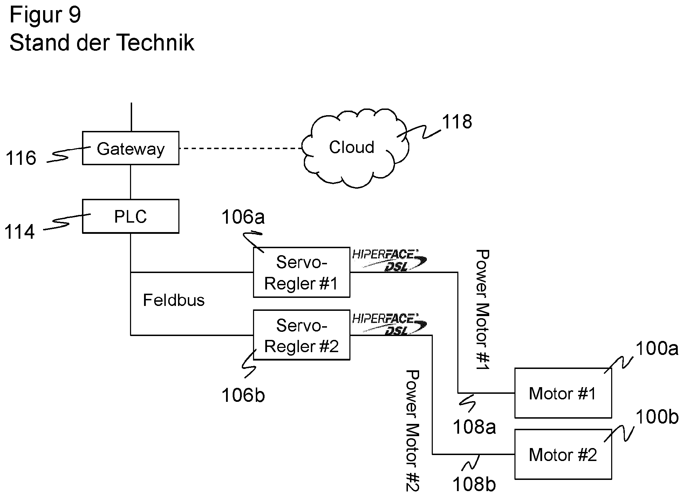

Figur 9 zeigt einen herkömmlichen Ansatz, um die Daten aus dem Regelkreis doch zugänglich zu machen. In dem gezeigten Beispiel sind nun zwei Regelkreise jeweils mit einem Motor 100a-b, einem Servoregler 106a-b und einer Verbindungsleitung 108a-b gemäß HIPERFACE DSL® vorgesehen, wobei diese Anzahl je nach Anwendung variabel ist. Die Servoregler 106a-b sind über ein gängiges Steuerungsprotokoll wie Feldbus an eine durch eine programmierbare Steuerung PLC repräsentierte Anlagensteuerung 114 angeschlossen.

In der Anlagensteuerung 114 stehen die Daten aus der Kommunikation in dem Regelkreis im Prinzip zur Verfügung, das aber nur insoweit, wie die Anlagensteuerung 114 sie benötigt und daher ausliest und weitergeben kann. Auf die derart bereitgestellten Daten kann ein Gateway 116 zugreifen und sie in ein beliebiges datenverarbeitendes System weiterleiten, das hier durch eine Cloud 118 repräsentiert ist. Der Nachteil ist, dass damit die verfügbaren Daten durch die Anlagensteuerung 114 beschränkt sind, und zudem muss eine Schnittstelle für das Gateway 116 zur Anlagensteuerung 114 geschaffen werden. Damit ist jeweils eine individuelle Lösung erforderlich, die mit dem Betreiber der Anlagensteuerung 114 erarbeitet wird. Das ist ein ausgesprochen unflexibler und aufwändiger Weg, um auf eine indirekte Weise einen immer noch unvollständigen Einblick in den Regelkreis und die Daten des Motorfeedbacksystems zu erhalten.

Es ist daher Aufgabe der Erfindung, eine verbesserte Datenerfassung über einen Regelkreis zu ermöglichen.

Diese Aufgabe wird durch eine Kommunikationsvorrichtung für einen Regelkreis und ein Verfahren zur Weitergabe von Daten aus einem Regelkreis nach Anspruch 1 beziehungsweise 15 gelöst. Der Regelkreis umfasst eine Regeleinrichtung und einen Aktor, der mit einem Sensor, insbesondere einer Gebereinrichtung eine Regelgröße bestimmt. Dabei ist Gebereinrichtung hier vorzugsweise so breit zu verstehen, dass der Aktor auf beliebige Weise die Regelgröße zurückmelden kann. Der Regelkreis ist vorzugsweise echtzeitfähig und jedenfalls für eine sehr enge und schnelle Rückmeldung ausgebildet (Fast-Loop). Auf einer Verbindungsleitung zwischen Regeleinrichtung und Aktor werden die jeweilige erfasste Regelgröße beziehungsweise die zum Nachregeln erforderlichen Ansteuerungen kommuniziert. Die Verbindungsleitung ermöglicht also eine bidirektionale Kommunikation.

Die Erfindung geht von dem Grundgedanken aus, die Kommunikationsvorrichtung in die Verbindungsleitung des Regelkreises einzuhängen. Dazu sind eine erste Schnittstelle zur Verbindung mit der Regeleinrichtung und eine zweite Schnittstelle zur Verbindung mit dem Aktor vorgesehen. Die Verbindung zwischen Regeleinrichtung und Aktor erfolgt danach durch die Kommunikationsvorrichtung, die die bisherige Verbindungsleitung in zwei Hälften teilt, wobei die bisherige Kommunikation je nach Ausführungsform einfach durchgeleitet oder lediglich in genau definierter Weise ohne Störung der Regelung modifiziert wird. Eine dritte Schnittstelle verbindet die Kommunikationsvorrichtung mit einem Drittsystem außerhalb des Regelkreises. Über diese Verbindung werden zumindest Teile der Kommunikation zwischen Regeleinrichtung und Aktor beziehungsweise dessen Sensor oder Gebereinrichtung nach außen an das Drittsystem übermittelt. Die dritte Schnittstelle kann prinzipiell eine Speicherkarte sein, die später ausgelesen wird, ist aber vorzugsweise eine Datenschnittstelle, die online beziehungsweise zumindest nahezu in Echtzeit vom Drittsystem ausgelesen wird, wobei nochmals bevorzugt ein Pufferspeicher zum zeitversetzten Auslesen denkbar bleibt.

Die Erfindung hat den Vorteil, dass die Daten aus dem Regelkreis beziehungsweise diejenigen des Sensors beziehungsweise der Gebereinrichtung auf flexible Weise im Drittsystem verfügbar werden. Damit werden komplexe Datenauswertungen, Diagnosen und Verbesserungen im Rahmen moderner Dateninfrastrukturen beispielsweise im Rahmen von Industrie 4.0 ermöglicht. Im Gegensatz zu der unter Bezugnahme auf die Figur 9 vorgestellten herkömmlichen Lösung über eine Anlagensteuerung bleibt die Erfindung unabhängig vom Hersteller des Regelkreises und der Gesamtanlage samt deren Anlagensteuerung. Es ist lediglich mit dem jeweiligen Anlagenbetreiber abzustimmen, welche Daten ausgelesen werden und wie deren Auswertung möglicherweise auf die Anlage zurückwirken soll. Die Hardware und Software für die Datenübertragung ist jedoch eine universelle Lösung, die nicht je Regelkreis, Anlagensteuerung und konkreter Feldbusschnittstelle und dergleichen angepasst werden muss. Die robuste Kommunikation zwischen Regeleinrichtung und Aktor bleibt unbeeinträchtigt und wird höchstens noch weiter verbessert, indem beispielsweise Sicherheitsfunktionalitäten hinzugefügt werden.

Vorzugsweise ist der Aktor ein Motor, der Sensor ein Drehgeber oder Motorfeedbacksystem und die Regeleinrichtung ein Servoregler. Der Regelkreis ist damit derjenige eines Servomotors, wie einleitend schon vorgestellt. Das ist eine wichtige und häufige Anwendung, wobei sich jedoch in den Details die Anlagen sehr häufig unterscheiden, so dass die Flexibilität der Erfindung besonders zum Tragen kommt. Außerdem bestehen in einem Servomotor recht harte Echtzeitanforderungen, so dass ein Eingriff in den Regelkreis mit herkömmlichen Mitteln nicht in Betracht gezogen wird.

Die dritte Schnittstelle ist bevorzugt eine drahtgebundene oder drahtlose Schnittstelle zur Datenkommunikation nach einem standardisierten Datenkommunikationsprotokoll, insbesondere Netzwerkprotokoll. Die Kommunikationsvorrichtung kann als Übersetzer aus dem Protokoll auf der Verbindungsleitung in ein beliebiges Protokoll für das Drittsystem fungieren. Damit wird ein Tor aus der speziellen Kommunikation innerhalb des Regelkreises in sämtliche gängigen oder sonst gewünschten Kommunikationswelten geschaffen, sowohl was die physikalische Anbindung als auch die Datenprotokolle betrifft. Die Verbindung zwischen der dritten Schnittstelle und dem Drittsystem erfolgt also beispielsweise über Ethernet, G5, UMTS, WiFi oder Bluetooth und mittels TCP/IP oder UDP oder sonstigem.

Das Drittsystem ist bevorzugt ein Computer zur Analyse einer Anlage mit dem Aktor, ein Netzwerk der Anlage oder eine Cloud. Je nach Ausführungsform wird ein dedizierter Computer zur Verfügung gestellt, der die Daten aus der dritten Schnittstelle verarbeitet, ein Anschluss in ein bestehendes Netzwerk der Anlage oder in ein übergeordnetes System wie eine Cloud geschaffen.

Regeleinrichtung und Aktor kommunizieren vorzugsweise über die Verbindungsleitung nach dem Standard HIPERFACE DSL® oder IO-Link. Der Standard HIPERFACE DSL® wurde einleitend erläutert und ermöglicht eine sehr robuste Echtzeitkommunikation in dem Regelkreis, so dass eine entsprechende Auslegung der Kommunikationsvorrichtung besonders vorteilhaft ist. Es gibt aber auch andere etablierte Schnittstellen, mit denen ein Sensor beziehungsweise eine Gebereinrichtung kommunizieren kann, wozu IO-Link zählt.

Erste und/oder zweite Schnittstelle sind vorzugsweise nach dem Standard HIPERFACE DSL® oder IO-Link ausgebildet. Je nach Ausführungsform der Kommunikationsvorrichtung beschränkt sich das auf die physische Ausgestaltung, um die Verbindungsleitung überhaupt anschließen zu können, oder bedeutet vollwertige Schnittstellen.

Die Verbindungsleitung ist bevorzugt in der Kommunikationsvorrichtung zwischen der ersten Schnittstelle und der zweiten Schnittstelle fortgesetzt und lässt Signale der Verbindungsleitung durch, insbesondere unter Verstärkung der Signale. Die Kommunikationsvorrichtung verhält sich in dieser Ausführungsform hinsichtlich der Kommunikation innerhalb des Regelkreises passiv. Die entsprechenden Signale werden lediglich durchgeschleift. Dabei sind einfache Veränderungen, etwa eine Verstärkung und damit eine Art Repeaterfunktion und dergleichen denkbar. Die Kommunikationsvorrichtung greift die Kommunikationssignale außerdem ab und gibt sie wie eine Weiche unmodifiziert oder nach Verarbeitung über die dritte Schnittstelle weiter.

Die Kommunikationsvorrichtung weist bevorzugt eine mit der ersten Schnittstelle und der zweiten Schnittstelle verbundene Master/Slave-Einheit auf. In dieser Ausführungsform wird die Verbindungsleitung des Regelkreises praktisch aufgeschnitten und in zwei Kommunikationskreise unterteilt. Die Kommunikationsvorrichtung ist an beiden Kommunikationskreisen zum Aktor und zur Regeleinrichtung hin beteiligt. Trotzdem kann sich die Funktion darauf beschränken, die jeweiligen Inhalte einfach weiterzugeben, so dass sie zwar nicht physikalisch, aber letztlich doch inhaltlich ebenfalls nur durchgeschleift werden. Es ist nun aber auch möglich, in die Kommunikation des Regelkreises einzugreifen. Die Master/Slave-Einheit ist vorzugsweise gemäß dem Standard HIPFERFACE DSL® oder IO-Link ausgebildet, dementsprechend sind dann erste und zweite Schnittstelle ausgelegt

Die Kommunikationsvorrichtung weist bevorzugt eine Kommunikationssteuerung auf, die dafür ausgebildet ist, die zwischen Aktor und Regeleinrichtung auf der Verbindungsleitung übermittelten Signale auszuwerten und zu entscheiden, welche Signale und/oder Daten an der ersten Schnittstelle, der zweiten Schnittstelle und/oder der dritten Schnittstelle ausgegeben werden. Die Kommunikationsvorrichtung wird damit zu einem intelligenten Kommunikationsteilnehmer in dem Regelkreis. Wie diese Funktion tatsächlich genutzt wird, unterscheidet sich aber je nach Ausführungsform. Es können alle Daten einfach weitergegeben, bestimmte Daten herausgefiltert, verändert oder sogar künstliche Daten eingeschleust werden. Das kann die Kommunikation über erste beziehungsweise zweite Schnittstelle im Regelkreis selbst, etwa um dessen Sicherheit zu gewährleisten oder ein Sicherheitsniveau zu erhöhen, ebenso wie eine intelligente Selektion oder Vorverarbeitung für die Kommunikation an das Drittsystem betreffen, wobei insbesondere Daten gefiltert, sortiert und/oder vorverarbeitet werden, ehe sie über die dritte Schnittstelle nach außen gegeben werden. Die Kommunikationssteuerung dient vorzugsweise nur als ausführendes Glied, für die eigentliche Intelligenz der Datenauswertung steht das beliebig mächtige Drittsystem zur Verfügung.

Die Kommunikationssteuerung ist bevorzugt dafür ausgebildet, die Signale und/oder Daten mit einer Erwartungshaltung zu vergleichen. Das ermöglicht eine automatische Analyse und Diagnostik, beispielsweise eine Meldung, wenn die Daten gegenüber anderen Betriebszeiten, baugleichen Anlagen und dergleichen ungewöhnlich erscheinen.

Die Kommunikationssteuerung ist bevorzugt für eine Protokollanpassung, insbesondere Änderung der Auflösung und/oder Datenrate, zwischen erster Schnittstelle und zweiter Schnittstelle ausgebildet. Dadurch kann die Kommunikationsvorrichtung für Kompatibilität zwischen Regeleinrichtung und Sensor beziehungsweise Gebereinrichtung sorgen. Das erleichtert Wartungen, Modernisierungen und Umrüsten von einem Regelkreis ohne Kommunikationsvorrichtung zu einem Regelkreis mit der erfindungsgemäßen Kommunikationsvorrichtung. Beispielsweise kann eine andere Regeleinrichtung in dem Regelkreis verwendet werden, ohne den Sensor beziehungsweise die Gebereinrichtung auszutauschen. Eine etwaig erforderliche zusätzliche Protokollanpassung kann einfach durch ein Firmwareupdate statt durch Austausch von Hardware erfolgen.

Die Kommunikationssteuerung ist bevorzugt dafür ausgebildet, den Datenfluss von Aktor und/oder Regeleinrichtung zumindest teilweise zu ersetzen. Auf der einen Seite wird damit ein Sensor beziehungsweise eine Gebereinrichtung ergänzt, beispielsweise indem eine Vorverarbeitung, Interpolation oder dergleichen vorgenommen wird, die von der Regeleinrichtung erwartet, von dem Sensor aber nicht geleistet wird. Im Extremfall wird der Sensor insgesamt emuliert, indem die Kommunikationsvorrichtung deren Kommunikation ganz ersetzt. In umgekehrter Kommunikationsrichtung kann die Kommunikationssteuerung regelnd eingreifen oder beispielsweise den Sensor umkonfigurieren.

Die Kommunikationssteuerung ist bevorzugt dafür ausgebildet, zusätzliche Daten von dem Sensor anzufordern, die der Regelkreis nicht benötigt. Der Sensor beziehungsweise die Gebereinrichtung ist möglicherweise in der Lage, mehr Funktionen zu erfüllen, als in dem Regelkreis benötigt werden. Das könnte eine noch höhere Messauflösung oder eine weitere Messgröße wie die Temperatur sein. Weitere Beispiele sind Diagnosedaten oder Logdateien des Sensors. Die Kommunikationsvorrichtung kann derartige Daten zusätzlich, also funktional gesehen parallel zu zum Regelkreis, an das Drittsystem weiterleiten.

Die Kommunikationsvorrichtung weist bevorzugt mindestens einen Anschluss für einen zusätzlichen Sensor auf. Das kann ein am Aktor oder in dessen Wirkungsbereich angebrachter zusätzlicher Sensor oder ein ganz anderer zusätzlicher Sensor sein, der die Analyse der Daten des Sensors im Regelkreis beziehungsweise überhaupt des Regelkreises unterstützt, wie ein Temperatursensor.

Bei dem erfindungsgemäßen Verfahren wird eine Kommunikationsvorrichtung, insbesondere eine erfindungsgemäße Kommunikationsvorrichtung nach einer der beschriebenen Ausführungsformen, in den Regelkreis eingehängt. Dazu wird, funktional betrachtet, die bestehende Verbindungsleitung aufgeschnitten, und die beiden Hälften werden jeweils zwischen erster Schnittstelle und Regeleinrichtung beziehungsweise zweiter Schnittstelle und Aktor angeschlossen. Tatsächlich würden dazu natürlich in aller Regel zwei separate Kabel verwendet.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung einer Kommunikationsvorrichtung;
- Fig. 2: eine schematische Darstellung einer Kommunikationsvorrichtung in der Verbindungsleitung eines Regelkreises;
- Fig. 3: eine Blockdarstellung einer Kommunikationsvorrichtung in einer Ausführungsform als Weiche;
- Fig. 4: eine Blockdarstellung einer Kommunikationsvorrichtung in einer Ausführungsform mit Master und Slave;
- Fig. 5: eine schematische Darstellung der Anordnung einer Kommunikationsvorrichtung im Regelkreis eines Servomotors zur Datenweiterleitung an ein Iokales Netzwerk;
- Fig. 6: eine Darstellung gemäß Figur 5, nun mit Datenweiterleitung an eine Cloud;
- Fig. 7: eine Darstellung gemäß Figur 6, nun mit Datenweiterleitung an einen dedizierten Analyse/Diagnoserechner;
- Fig. 8: eine Darstellung eines herkömmlichen Regelkreises in einem Servomotor; und
- Fig. 9: eine schematische Darstellung der Weitergabe von Daten aus einer dem Regelkreis übergeordneten Anlagesteuerung nach dem Stand der Technik.

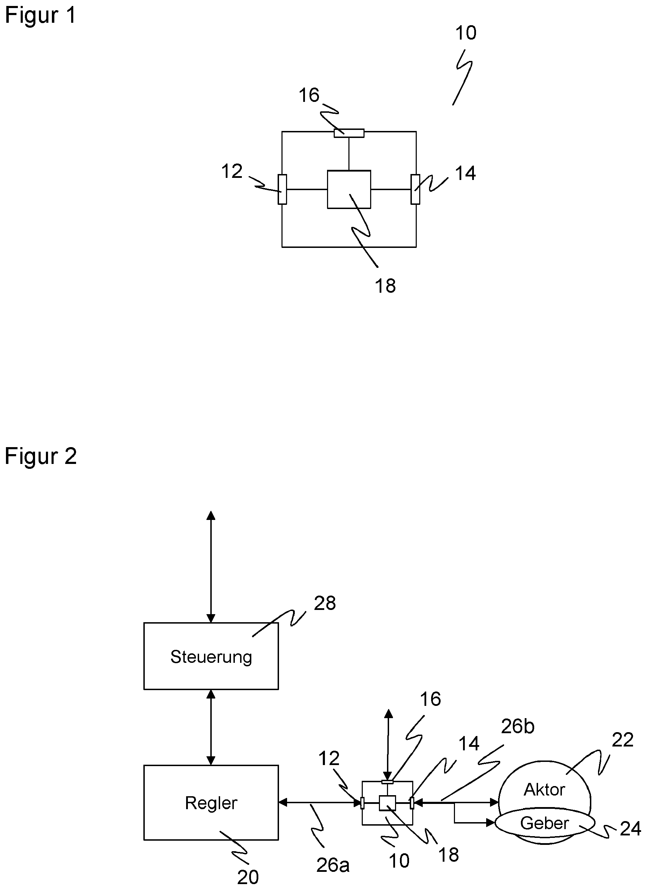

Figur 1 zeigt eine schematische Darstellung einer Kommunikationsvorrichtung 10. Sie weist eine erste Schnittstelle 12 und eine zweite Schnittstelle 14 auf, um darüber in eine Verbindungsleitung eines Regelkreises eingesetzt zu werden. Die Verbindungsleitung wird dann intern in der Kommunikationsvorrichtung 10 zwischen der ersten Schnittstelle 12 und der zweiten Schnittstelle 14 fortgesetzt. An einer dritten Schnittstelle 16 kann drahtlos oder drahtgebunden ein Drittsystem angeschlossen werden, um Daten von der Verbindungsleitung an das Drittsystem weiterzugeben oder umgekehrt Daten aus dem Drittsystem über die erste beziehungsweise zweite Schnittstelle auf der Verbindungsleitung weiterzugeben, insbesondere Verarbeitungsergebnisse aufgrund von zuvor aus dem Regelkreis weitergegebenen Daten. Eine Kommunikationssteuerung 18 koordiniert die jeweilige Datenweitergabe und leistet optional auch schon Vorverarbeitungen und dergleichen.

Figur 2 zeigt die Kommunikationsvorrichtung 10 eingebaut in einem Regelkreis. In dem Regelkreis regelt ein Regler 20 einen Aktor 22 in Echtzeit oder jedenfalls sehr kurzen Zyklen. Um die Regelgröße zu erfassen, ist bei dem Aktor 22 ein Geber 24 vorgesehen, wobei manche Aktoren 22 dessen Funktion mit übernehmen. Die für die Regelung notwendige Kommunikation (Fast-Loop Kommunikation) der jeweils erfassten Regelgröße beziehungsweise der zum Nachregeln erforderlichen Ansteuerungen erfolgt über eine Verbindungsleitung 26a-b, die sich auf Seiten des Aktors aufteilt, um auch den Geber 24 einzubeziehen. Diese Aufteilung erfolgt beispielsweise durch entsprechende Zuordnung der Einzelleitungen einer mehradrigen Verbindungsleitung 26a-b. Die Verbindungsleitung 26a-b kann überdies den Aktor 22 versorgen. Der Regler 20 ist beispielsweise über einen Feldbus an eine Steuerung 28 angeschlossen.

Die Kommunikationsvorrichtung 10 ist über die erste Schnittstelle 12 mit dem Regler 20 und über die zweite Schnittstelle 14 mit dem Aktor 22 verbunden ist. Auf diese Weise wird die Verbindungsleitung 26a-b in zwei Abschnitte geteilt. Die Kommunikationsvorrichtung 10 stellt intern die Verbindung zwischen den beiden Abschnitten 26a-b her. Außerdem werden über die dritte Schnittstelle 16 zumindest Teile der Kommunikation mit dem Geber 24 beziehungsweise dem Regler 20 oder darauf abgeleitete Daten an ein Drittsystem ausgegeben.

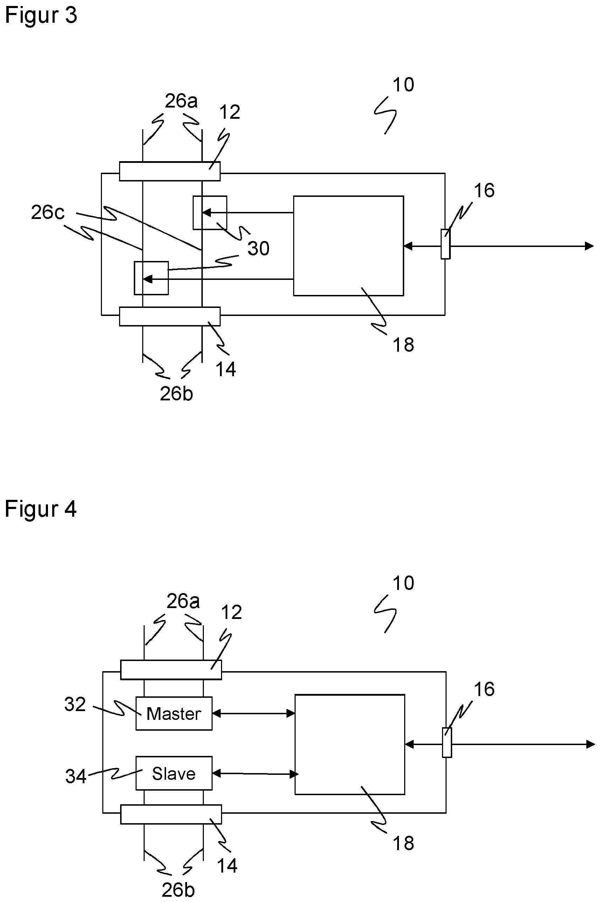

Figur 3 zeigt eine weitere Ausführungsform der Kommunikationsvorrichtung 10. Die Verbindungsleitung 26a-b wird hier praktisch nur auf einem internen Abschnitt 26c durchgeleitet. Die erste und zweite Schnittstelle 12, 14 können auf physische Stecker oder Buchsen zum Weiterführen der Verbindungsleitung 26a-b beschränkt bleiben. Die Kommunikation zwischen Regler 20 Aktor 22 beziehungsweise Geber 24 bleibt funktional unverändert. Dabei sind aber zusätzliche Modifikationen denkbar, wie Signalverstärkungen und dergleichen. Die beiden gezeigten Einzelleitungen stehen beispielhaft für mehrere Verbindungsstränge, etwa für die beiden Kommunikationsrichtungen, und können in sich wiederum mehrere Adern aufweisen.

In dieser Ausführungsform wird die Kommunikation auf der Verbindungsleitung 26a-c praktisch nur durch eine Signalweiche 30 in beliebiger technischer Ausprägung belauscht. Die Kommunikationssteuerung 18 selektiert diejenige Information, die über die dritte Schnittstelle 16 nach außen an das Drittsystem weitergegeben werden soll. Dabei bestehen verschiedene Möglichkeiten, von einer Weiterleitung roher Datensignale über eine Übersetzung der auf der Verbindungsleitung 26a-c kommunizierten Daten in ein anderes Datenprotokoll bis zu einer Vorverarbeitung oder sogar Analyse und Diagnose dieser Daten.

Figur 4 zeigt eine weitere Ausführungsform der Kommunikationsvorrichtung 10. Im Gegensatz zu Figur 3 sind hier die erste und zweite Schnittstelle 12, 14 als vollständige Schnittstellen mit einer Mastereinheit 32 beziehungsweise einer Slaveeinheit 34 ausgebildet. Die Kommunikationsvorrichtung 10 unterbricht also in diesem Fall die Kommunikation und führt sie aktiv auf den beiden Abschnitten der Verbindungsleitung 26a-b. Die ersten und zweiten Schnittstellen 12, 14 samt ihren Master- und Slaveeinheiten 32, 34 sind für dasjenige Protokoll ausgebildet, das auch sonst ohne die Kommunikationsvorrichtung 10 im Regelkreis auf der Verbindungsleitung 26a-b genutzt wird.

In dieser Ausführungsform hat die Kommunikationsvorrichtung 10 die volle Kontrolle über Inhalte und Protokolle. Sie kann damit nicht nur als Weiche, sondern auch als Übersetzer arbeiten oder darüber hinaus noch zusätzliche Funktionalität bieten. Somit können auch innerhalb des Regelkreises auf der Verbindungsleitung 26a-b Kommunikationsinhalte wahlweise verändert, ausgefiltert oder durchgereicht werden. Dadurch kann Information gezielt blockiert werden, es kann auch Information übertragen werden, die der Regelkreis originär nicht überträgt, eine Datenrate oder Auflösung adaptiert werden und dergleichen. Prinzipiell könnte die Kommunikationsvorrichtung 10 auch gänzlich unterschiedliche Protokolle auf den Teilabschnitten der Verbindungsleitung 26a-b verwenden. Vorzugsweise wird in die Kommunikation für die eigentliche Regelungsfunktion nicht eingegriffen. Wenn das doch geschieht, dann sollte gewährleistet sein, dass die Kommunikationsvorrichtung 10 die Regelung nur in einer in der Anlage vorgesehenen Weise beeinflusst. Dann hat ein solcher Eingriff durchaus seine Berechtigung, beispielsweise um nachträglich durch Testverfahren und dergleichen für funktionale Sicherheit in dem Regelkreis zu sorgen.

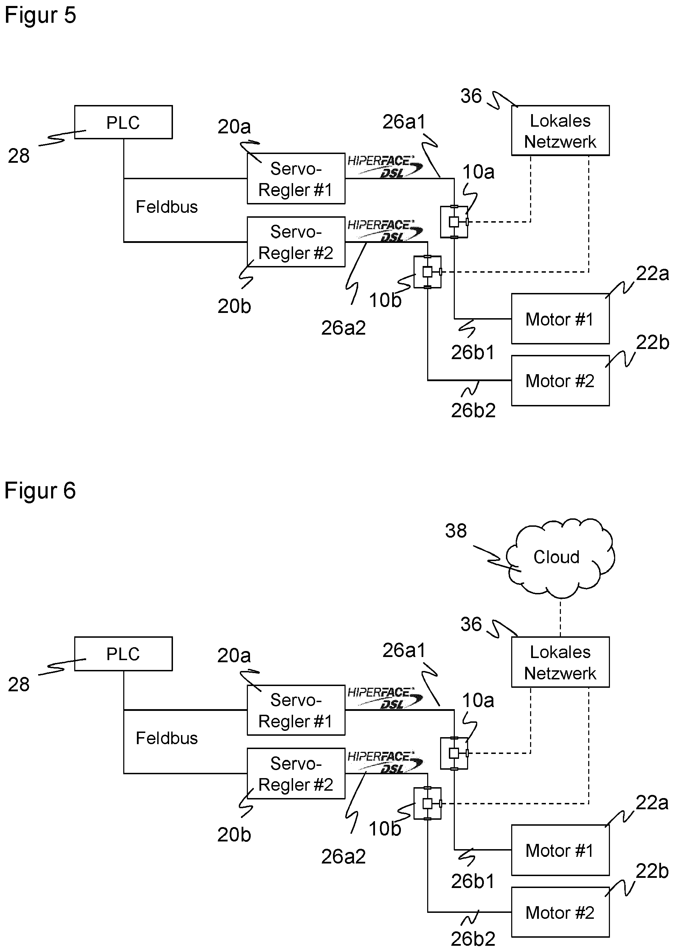

Figur 5 zeigt die Anordnung einer Ausführungsform der Kommunikationsvorrichtung 10 in dem Regelkreis eines Servomotors. Dabei ist rein beispielhaft die Ausführungsform gemäß Figur 1 dargestellt, andere Ausführungsformen sind ebenso denkbar. Der grundsätzliche Aufbau innerhalb des Regelkreises entspricht der einleitend schon erläuterten Figur 9. Dabei sind rein beispielhaft gleich zwei Regelkreise gezeigt, wobei stattdessen nur ein Regelkreis möglich ist und umgekehrt die Anzahl je nach Anlage auch noch viel höher sein kann. Während in Figur 5 je eine Kommunikationsvorrichtung 10a-b pro Regelkreis vorgesehen ist, wäre auch denkbar, in nur einer einzigen Kommunikationsvorrichtung 10a-b zusätzliche Anschlüsse mit mehreren ersten und zweiten Schnittstellen 12, 14 für mehrere Regelkreise, dabei aber vorzugsweise nur einer gemeinsamen dritten Schnittstelle 16 vorzusehen.

In den Servomotoren sind die Aktoren jeweils Motoren 22a-b und die Regler die zugehörigen Servoregler 20a-b. Zu den Motoren 22a-b gehört vorzugsweise noch ein Motorfeedbacksystem als jeweiliger Geber 24. Dazwischen kommuniziert der Regelkreis auf einer Verbindungsleitung 26a1, 26a2, 26b1, 26b2, in die jeweils die Kommunikationsvorrichtung 10a-b eingehängt ist. Jeder einzelne Regelkreis kann vorzugsweise so ausgestaltet sein, wie dies einleitend zu Figur 8 erläutert wurde. Das Protokoll im Regelkreis ist dann vorzugsweise HIPERFACE DSL®.

Die dritte Schnittstelle 16 kommuniziert in diesem Ausführungsbeispiel mit einem lokalen Netzwerk 36 des Anlagenbetreibers. Folglich besteht vorzugsweise im Hintergrund eine nicht gezeigte direkte oder indirekte Verbindung zwischen der Steuerung 28 der Anlage und dem lokalen Netzwerk 36. Die dritte Schnittstelle 16 kann für ein beliebiges Netzwerkprotokoll ausgebildet sein, beispielsweise TCP-IP oder UDP, und dafür sind sämtliche bekannten drahtgebundenen und drahtlosen Verbindungen denkbar, wie Ethernet, 3G, 4G, 5G, WiFi, Bluetooth und sonstige offene oder proprietäre Standards.

Die Daten, die über die dritte Schnittstelle 16 in das lokale Netzwerk 36 übertragen werden, können dort mit beliebiger Analyse- und Diagnosesoftware verarbeitet werden. Die entsprechende Software kann der Anlagenbetreiber, der Hersteller des Servomotors oder der Hersteller der Geber 24 beziehungsweise der Kommunikationsvorrichtung 10 oder ein Dritter zur Verfügung stellen. Es ist denkbar, Verarbeitungsergebnisse an die Kommunikationsvorrichtung zurückzuspielen, insbesondere um dort Konfigurationen zu ändern oder auch in den Regelkreis einzugreifen.

Figur 6 ist eine ähnliche Darstellung wie Figur 5, wobei hier das lokale Netzwerk 36 nochmals weiter mit einer Cloud 38 verbunden ist. Die dritte Schnittstelle 16 könnte alternativ direkt mit der Cloud 38 verbunden werden. Aus der Cloud 38 heraus kann noch sehr viel einfacher und flexibler eine Verarbeitung der Daten aus dem Regelkreis erfolgen. Es ist keine lokale Installation von Software notwendig, oder jedenfalls kann dieser Aufwand durch Unterstützung aus der Cloud 38 verringert werden. Es ist eine wesentlich leistungsfähigere und stets aktuelle Verarbeitung möglich. Außerdem können über eine Cloud 38 systemübergreifend über eine Vielzahl von Anlagen Daten erfasst und gemeinsam analysiert werden. Durch solche Maßnahmen, seien sie anlagenbezogen oder aus einer Vielzahl von Datenquellen gespeist, können Analysen immer genauer und besser werden, und beispielsweise kann auf kritische Zustände verlässlich und rechtzeitig hingewiesen werden.

Figur 7 ist nochmals eine ähnlich Darstellung wie Figur 5. Hier ist die dritte Schnittstelle 16 mit einem Analyse-Diagnose-Rechner 40 verbunden, der dann optional weiter mit dem lokalen Netzwerk 36 verbunden wird. Ein zusätzlicher Anschluss an eine Cloud 38 ist auch möglich, aber ein Vorteil der Anordnung gemäß Figur 7 ist, dass dies nicht notwendig ist, wenn der Analyse-Diagnose-Rechner 40 genug Speicher und Rechenleistung bereitstellet. Der Analyse-Diagnose-Rechner 40 ist darauf ausgelegt, mit Kommunikationsvorrichtungen 10a-b sowie den verwendeten Gebern 24 zusammenzuarbeiten. Dort können vom Hersteller der Kommunikationsvorrichtungen 10a-b, der Geber 24 und/oder der Servomotoren bereits die notwendigen Softwarepakete vorinstalliert sein, um die Daten von der dritten Schnittstelle 16 auszuwerten. Alternativ erfolgt diese Installation vor Ort oder wird dort modifiziert. Der Vorteil ist jedenfalls, dass der Analyse-Diagnose-Rechner 40 eine von dem lokalen Netzwerk 36 separierte Einheit darstellt, die auch unter anderer Verantwortung stehen kann. Dadurch sind unterschiedliche Fachleute für den Analyse-Diagnose-Rechner 40 und das lokale Netzwerk 36 verantwortlich. Der Anlagenbetreiber muss sich daher insoweit nicht selbst um die Installation und Wartung kümmern, aber auch keinen Außenstehenden in sein lokales Netzwerk 36 eingreifen lassen.

In der bisherigen Erläuterung wurde nur allgemein davon gesprochen, dass mittels der Kommunikationsvorrichtung 10 Daten aus einem Regelkreis, insbesondere einem Motorfeedback-Regelkreis eines Servomotors ausgeschleust und möglicherweise auch zurückgespielt werden können. Abschließend sollen nun noch einige Anwendungsbeispiele aufgeführt werden.

Die Daten können zur Diagnose des jeweiligen Regelkreises und damit letztlich der Anlage verwendet werden. Dabei können Vergleiche mit Daten einer Spezifikation, Daten aus unterschiedlichen Betriebszeiten oder über verschiedene Anlagen hinweg stattfinden, ob sich beispielsweise Hinweise auf Fehlfunktionen, Ungenauigkeiten, erforderliche Wartungen oder drohende künftige Ausfälle ergeben. Die Analyse kann den Aktor 22, Geber 24 oder der Anwendung beziehungsweise Anlage zum Gegenstand haben, in die Aktor 22 beziehungsweise Geber 24 eingebunden sind. Dazu zählen beispielsweise Erwartungen an das Verhalten des Aktors 22 unter Last oder eine Analyse der bearbeiteten Last. Gerade solche Diagnosefunktionen können profitieren, wenn sie auf große Datenmengen gestützt sind, und auch von Verfahren des maschinellen Lernens, insbesondere tiefen neuronalen Netzen Gebrauch machen. Es ist denkbar, dass die Kommunikationsvorrichtung 10 über die Verbindungsleitung 26a-b Daten anfordert, die der Regler 20 selbst nicht benötigt und die somit eigens für die Kommunikationsvorrichtung 10 und damit das Drittsystem 36, 38, 40 zur Verfügung gestellt werden. Damit wird eine zusätzliche Diagnoseschnittstelle zum Aktor 22 und Geber 24 geschaffen.

Denkbar ist weiterhin, insbesondere mit einer Ausführungsform gemäß Figur 4, dass die Kommunikationsvorrichtung 10 für den Regler 20 den Aktor 22 und Geber 24 oder umgekehrt für den Aktor 22 und Geber 24 den Regler 20 emuliert. Die jeweiligen Endstellen der Verbindungsleitung 26a-b können nicht unterscheiden, was die Quelle der Kommunikation ist. Da ermöglicht weitere Diagnosen und vereinfacht die Weiterentwicklung, weil beispielsweise der Aktor 22 für Tests gar nicht betrieben werden muss.

Die Kommunikationsvorrichtung 10 kann als Übersetzer zwischen verschiedenen Protokollen auf den Abschnitten der Verbindungsleitung 26a-b fungieren. Dabei können lediglich Parameter modifiziert werden, indem beispielsweise die Kommunikationsschnittstelle mit höherer Auflösung zur einen Seite kommuniziert als zur anderen Seite. Es ist aber auch denkbar, gänzlich unterschiedliche Protokolle zum Regler 20 auf der einen Seite und zum Aktor 22 und Geber 24 auf der anderen Seite hin zu verwenden, insbesondere auch unterschiedliche Protokollversionen. So vereinfacht die Kommunikationsschnittstelle es, die Kompatibilität in dem Regelkreis zu erhalten.

In einer nicht gezeigten Weiterbildung der Kommunikationsvorrichtung 10 ist noch mindestens ein Anschluss für einen zusätzlichen Sensor vorgesehen. Der zusätzliche Sensor gehört nicht unmittelbar zum Regelkreis, kann aber dafür relevante Größen wie eine Temperatur erfassen. Die Daten des zusätzlichen Sensors werden in die Datenanalyse und die Entscheidung einbezogen, welche Daten wie modifiziert und wohin weitergegeben werden. Alternativ kann die Kommunikationsvorrichtung 10 für solche weiteren Sensoren auch lediglich als Logger dienen, um für ganz unabhängige Zwecke Sensordaten nach außen weiterzugeben.

Zur gewerblichen Anwendbarkeit gibt es neben der reinen Hardware der Kommunikationsvorrichtung 10 vielfältige Möglichkeiten, zur Auswertung der damit verfügbar gewordenen Daten beizutragen. Es sind auch geschichtete Bezahlmodelle vorstellbar, in denen nur bestimmte Teile der Daten weitergeleitet werden oder bestimmte Funktionen erst über Freigabeschlüssel zugänglich gemacht werden, wie beispielsweise eine höhere Messauflösung eines Gebers 24. Die Kommunikationsvorrichtung 10 erleichtert die Datenausgabe aus dem Regelkreis sowohl bei Neuinstallationen wie im Falle der Nachrüstung einer bestehenden Anlage.

## Patentansprüche

1. Kommunikationsvorrichtung (10) für einen Regelkreis mit einer Regeleinrichtung (20) und einem über eine Verbindungsleitung (26) mit der Regeleinrichtung (20) verbundenen Aktor (22), der einen Sensor (24), insbesondere eine Gebereinrichtung, zum Bestimmen einer Regelgröße aufweist,
**dadurch gekennzeichnet,**
**dass** die Kommunikationsvorrichtung (10) zum Anschließen an die Verbindungsleitung (26) eine erste Schnittstelle (12) für eine Verbindung mit der Regeleinrichtung (20), eine zweite Schnittstelle (14) für eine Verbindung mit dem Aktor (22) und eine dritte Schnittstelle (16) für eine Verbindung mit einem Drittsystem (36, 38, 40) aufweist, um zumindest Teile einer Kommunikation auf der Verbindungsleitung (26) oder daraus gewonnene Daten an das Drittsystem (36, 38, 40) weiterzugeben.

2. Kommunikationsvorrichtung (10) nach Anspruch 1,
wobei der Aktor (22) ein Motor, der Sensor (24) ein Drehgeber und die Regeleinrichtung (20) ein Servoregler ist.

3. Kommunikationsvorrichtung (10) nach Anspruch 1 oder 2,
wobei die dritte Schnittstelle (16) eine drahtgebundene oder drahtlose Schnittstelle zur Datenkommunikation nach einem standardisierten Datenkommunikationsprotokoll, insbesondere Netzwerkprotokoll ist.

4. Kommunikationsvorrichtung (10) nach einem der vorhergehenden Ansprüche,
wobei das Drittsystem (36, 38, 40) ein Computer (40) zur Analyse einer Anlage mit dem Aktor (22), ein Netzwerk (36) der Anlage oder eine Cloud (38) ist.

5. Kommunikationsvorrichtung (10) nach einem der vorhergehenden Ansprüche,
wobei Regeleinrichtung (20) und Aktor (22) über die Verbindungsleitung (26) nach dem Standard HIPERFACE DSL® oder IO-Link kommunizieren.

6. Kommunikationsvorrichtung (10) nach einem der vorhergehenden Ansprüche,
wobei erste und/oder zweite Schnittstelle (12, 14) nach dem Standard HIPERFACE DSL® oder IO-Link ausgebildet sind.

7. Kommunikationsvorrichtung (10) nach einem der vorhergehenden Ansprüche,
wobei die Verbindungsleitung (26) in der Kommunikationsvorrichtung (10) zwischen der ersten Schnittstelle (12) und der zweiten Schnittstelle (14) fortgesetzt ist und Signale der Verbindungsleitung (26) durchlässt, insbesondere unter Verstärkung der Signale.

8. Kommunikationsvorrichtung (10) nach einem der Ansprüche 1 bis 6,
wobei die Kommunikationsvorrichtung (10) eine mit der ersten Schnittstelle (12) und der zweiten Schnittstelle (14) verbundene Master/Slave-Einheit (32, 34) aufweist, die insbesondere gemäß dem Standard HIPERFACE DSL® oder IO-Link ausgebildet ist.

9. Kommunikationsvorrichtung (10) nach einem der vorhergehenden Ansprüche, die eine Kommunikationssteuerung (10) aufweist, die dafür ausgebildet ist, die zwischen Aktor (22) und Regeleinrichtung (20) auf der Verbindungsleitung (26) übermittelten Signale auszuwerten und zu entscheiden, welche Signale und/oder Daten an der ersten Schnittstelle (12), der zweiten Schnittstelle (14) und/oder der dritten Schnittstelle (16) ausgegeben werden, insbesondere die Daten zu filtern, zu sortieren und/oder vorzuverarbeiten, die über dritte Schnittstelle (16) nach außen gegeben werden.

10. Kommunikationsvorrichtung (10) nach Anspruch 9,
wobei die Kommunikationssteuerung (18) dafür ausgebildet ist, die Signale und/oder Daten mit einer Erwartungshaltung zu vergleichen.

11. Kommunikationsvorrichtung (10) nach Anspruch 9 oder 10,
wobei die Kommunikationssteuerung (18) für eine Protokollanpassung, insbesondere Änderung der Auflösung und/oder Datenrate, zwischen erster Schnittstelle (12) und zweiter Schnittstelle (14) ausgebildet ist.

12. Kommunikationsvorrichtung (10) nach einem der Ansprüche 9 bis 11,
wobei die Kommunikationssteuerung (18) dafür ausgebildet ist, den Datenfluss von Aktor (22) und/oder Regeleinrichtung (20) zumindest teilweise zu ersetzen.

13. Kommunikationsvorrichtung (10) nach einem der Ansprüche 9 bis 12,
wobei die Kommunikationssteuerung (18) dafür ausgebildet ist, zusätzliche Daten von dem Sensor (24) anzufordern, die der Regelkreis nicht benötigt.

14. Kommunikationsvorrichtung (10) nach einem der Ansprüche 9 bis 13,
die mindestens einen Anschluss für einen zusätzlichen Sensor aufweist.

15. Verfahren zur Weitergabe von Daten aus einem Regelkreis mit einer Regeleinrichtung und einem über eine Verbindungsleitung mit der Regeleinrichtung verbundenen Aktor, der einen Sensor (24), insbesondere eine Gebereinrichtung, zum Bestimmen einer Regelgröße aufweist,
**dadurch gekennzeichnet,**
**dass** eine Kommunikationsvorrichtung (10), insbesondere eine Kommunikationsvorrichtung (10) nach einem der vorhergehenden Ansprüche, über eine erste Schnittstelle (12) in die Verbindungsleitung (26a) zu der Regeleinrichtung (20) und über eine zweite Schnittstelle (14) in die Verbindungsleitung (26b) zu dem Aktor (22) angeschlossen wird und die Kommunikationsvorrichtung (10) über eine dritte Schnittstelle (16) zumindest Teile einer Kommunikation auf der Verbindungsleitung (26) oder daraus gewonnene Daten an ein Drittsystem (36, 38, 40) weitergibt.
